# DEMANDE DE BREVET EUROPEEN

(11) **EP 4 057 082 A1**
(43) Date de publication de la demande: **14.09.2022**
(21) Numéro de dépôt: 22159768.5
(22) Date de dépôt: 02.03.2022
(51) Int. Cl.: G04B 19/20, G04F 7/08

(54) **PIÈCE D HORLOGERIE COMPORTANT UN AFFICHAGE À EFFET MOIRÉ**

(30) Priorité: 09.03.2021 CH 2532021
(71) Demandeur: Manufacture d'Horlogerie Audemars Piguet SA, 1348 Le Brassus (CH)
(72) Inventeur: Martel, Julien, 2300 La Chaux-de-Fonds (CH)
(74) Mandataire: P&TS SA (AG, Ltd.)

(57) **Abrégé**

La présente invention concerne une pièce d'horlogerie comportant un mouvement horloger comprenant une complication de type chronographe ou compte à rebours, un corps fixe (10) et un affichage (20) à effet moiré pour l'affichage d'une information temporelle associée au chronographe ou au compte à rebours. L'affichage comporte un disque mobile (22) comprenant un indicateur (24) de l'information temporelle. Le disque mobile (22) est, d'une part, monté sur un axe (23) en prise avec le mouvement horloger et, d'autre part, agencé pour tourner en dessus ou en-dessous du corps fixe (10). L'un du disque mobile (22) et du corps fixe (10) comporte une pluralité d'ouvertures (26) agencées sur 360°. L'autre du disque mobile (22) et du corps fixe (10) comporte une trame possédant une répétition de motifs comprenant un premier ensemble de motifs ayant un premier aspect visuel (27) et un second ensemble de motifs ayant un second aspect visuel (28). Les motifs ayant le premier aspect visuel sont agencés en alternance avec les motifs ayant le second aspect visuel sur 360°. La pluralité d'ouvertures (26) sont séparées entre elles par une pluralité de portions (30) destinées à masquer progressivement les motifs de la trame afin de produire l'effet moiré lorsque le disque mobile (22) est en rotation.

## Description

### Domaine technique

La présente invention concerne une pièce d'horlogerie comportant un affichage à effet moiré permettant d'indiquer rapidement si une complication de la pièce d'horlogerie est en marche ou à l'arrêt.

### Etat de la technique

Des pièces d'horlogerie comportant un affichage à effet moiré sont déjà connues.

A titre d'exemple US5586089 divulgue une pièce d'horlogerie comportant une pluralité de disques à la place des aiguilles standard des heures, des minutes et des secondes, imprimées avec des motifs de zones transparents ou opaques. Lorsque ces plaques tournent, des effets visuels nouveaux et stimulants sont produits par la superposition des plaques sous la forme de multiples images moirées. L'affichage de l'heure, des minutes et des secondes est obtenu par des indicateur à la périphérie des disques et pointant sur une échelle annulaire de 1 à 12 agencé sur un cadran annulaire. Cette solution nécessite des plaques transparentes délicates.

CH709374A1 décrit une pièce d'horlogerie deux corps superposés et qui utilise également l'effet moiré pour donner l'effet d'une indication tournant plus rapidement que la vitesse de rotation relative des deux corps.

L'effet moiré utilisé dans les pièces d'horlogerie de l'art antérieur n'a pour but que de produire un effet visuel intéressant.

### Bref résumé de l'invention

Un but de la présente invention est par conséquent de proposer une pièce d'horlogerie comportant un affichage à effet moiré pour déterminer en un seul coup d'œil si une complication du type chronographe ou compte à rebours est en marche ou à l'arrêt, tout en permettant la lecture d'une information temporelle.

Selon l'invention, ce but est atteint notamment au moyen d'une pièce d'horlogerie comportant un mouvement horloger comprenant une complication de type chronographe ou compte à rebours, un corps fixe et un affichage à effet moiré pour l'affichage d'une information temporelle associée au chronographe ou au compte à rebours. L'affichage comporte un disque mobile solidaire d'un indicateur de l'information temporelle. Le disque mobile est, d'une part, solidaire d'un axe en prise avec le mouvement horloger et, d'autre part, agencé pour tourner en dessus ou en-dessous du corps fixe. L'un du disque mobile et du corps fixe comporte une pluralité N d'ouvertures agencées sur 360°. L'autre du disque mobile et du corps fixe comporte une trame possédant une répétition de motifs comprenant un premier ensemble de motifs ayant un premier aspect visuel et un second ensemble de motifs ayant un second aspect visuel. Les motifs ayant le premier aspect visuel sont agencés en alternance avec les motifs ayant le second aspect visuel sur 360°. La pluralité d'ouvertures sont séparées entre elles par une pluralité de portions destinées à masquer progressivement les motifs de la trame afin de produire l'effet moiré lorsque le disque mobile est en rotation.

Le corps fixe peut être lié au cadran. Le corps fixe peut être constitué par une portion du cadran.

Le disque peut être un disque plein. Alternativement, le disque peut être constitué par un anneau.

Le déplacement très rapide des motifs relativement aux ouvertures permet de détecter en un coup d'œil que la complication affichée par un compteur du chronographe ou du compte à rebours est en marche. Le déplacement de l'indicateur d'information temporelle permet une lecture aisée de cette indication temporelle.

L'indicateur d'information temporelle peut être affiché sur le disque mobile au-dessous du corps fixe et être visible à travers une des ouvertures. Dans ce premier mode de réalisation, la largeur de l'indicateur d'information temporelle est de préférence égale ou supérieure au pas des ouvertures, en sorte que l'indicateur d'information temporel est visible en tout temps à travers au moins une des ouvertures. L'indication temporelle peut être lue en vérifiant quelle ouverture se superpose à cet indicateur.

Dans un deuxième mode de réalisation, l'indicateur d'information temporelle peut être affiché sur le disque mobile au-dessus du corps fixe et être ainsi visible en tout temps.

Selon une forme de réalisation, l'affichage est un compteur comprenant le disque mobile dont l'axe de rotation est coaxial à l'axe central du compteur.

L'indicateur d'information temporelle peut être sous la forme d'un segment disposé sur le disque mobile ou sous la forme d'une aiguille montée sur l'axe du disque mobile afin que le compteur puisse indiquer une information temporelle.

Les motifs peuvent être constitués par des segments radiaux. Les ouvertures peuvent être constituées par des ouvertures radiales.

Selon une forme de réalisation, le compteur est un compteur de seconde. Le disque mobile est en prise avec le mouvement horloger pour être entraîné à raison d'un tour par minute afin que l'indicateur indique les secondes.

Selon le deuxième mode de réalisation avec un disque mobile au-dessus du corps fixe, le compteur comprend une première zone annulaire comportant la trame. La première zone annulaire fait partie intégrante du corps fixe. Le corps fixe fait partie du cadran ou est réalisé sur une pièce rapportée sur le cadran. Le disque mobile comporte une seconde zone annulaire comportant la pluralité d'ouvertures agencée sur 360°.

Le nombre d'ouvertures est égal à N.

Dans une variante du deuxième mode de réalisation, le nombre d'ouvertures N est plus grand que le nombre de motifs ayant un premier aspect visuel, et également plus grand que le nombre de motifs ayant un second aspect visuel. L'espacement angulaire entre les axes médians de deux motifs voisins de même aspect visuel est alors plus grand que l'espacement entre les axes médians de deux ouvertures voisines. Par exemple, le nombre d'ouvertures peut être égal à N et le nombre de motifs de chaque aspect visuel peut être égal à N-1. L'effet moiré engendre alors un déplacement de motifs derrière les ouvertures dans le sens de rotation du disque mobile.

Selon une autre variante du deuxième mode de réalisation, toujours avec un disque mobile au-dessus du corps fixe, le nombre d'ouvertures N est plus petit que le nombre de motifs (par exemple N+1) ayant un premier aspect visuel, et également plus petit que le nombre de motifs ayant un second aspect visuel. L'espacement angulaire entre les axes médians de deux motifs voisins de même aspect visuel est donc plus petit que l'espacement entre les axes médians de deux ouvertures voisines. Par exemple, le nombre d'ouvertures N peut être égal à N et le nombre de motifs de chaque aspect visuel peut être égal à N+1. L'effet moiré engendre alors un déplacement de motifs derrière les ouvertures dans le sens inverse de rotation du disque mobile.

Conformément au premier mode de réalisation évoqué ci-dessus, il est aussi possible de placer le disque mobile muni de motifs au-dessous du corps fixe muni d'ouvertures; cette inversion provoque aussi une inversion du sens de déplacement de motifs. Dans une variante de ce mode de réalisation, le nombre d'ouvertures N est plus grand que le nombre de motifs (par exemple N-1) ayant un premier aspect visuel, et également plus grand que le nombre de motifs ayant un second aspect visuel. L'effet moiré engendre alors un déplacement de motifs derrière les ouvertures dans le sens inverse de rotation du disque mobile.

Selon une autre variante de ce premier mode de réalisation, toujours avec un disque mobile au-dessous du corps fixe, le nombre d'ouvertures N est plus petit que le nombre de motifs (par exemple N+1) ayant un premier aspect visuel, et également plus petit que le nombre de motifs ayant un second aspect visuel. L'effet moiré engendre alors un déplacement de motifs derrière les ouvertures dans le sens de rotation du disque mobile.

Selon une forme de réalisation, le nombre d'ouvertures N ou le nombre de motifs est égal à 30 pour obtenir un effet moiré de deux secondes lorsque la complication est en marche alors qu'en réalité le disque mobile effectue une rotation en 60 secondes.

Un mode de réalisation avec 30 motifs de chaque type et 29 ou 31 ouvertures sur un disque mobile au-dessus du corps fixe est avantageux, car il permet d'afficher l'indicateur d'information temporelle en tout temps.

Selon une forme de réalisation le compteur comporte une première zone annulaire comprenant la trame. La première zone annulaire fait partie du disque mobile. Le disque mobile est agencé sous le corps fixe, par exemple sous le cadran. Le corps fixe comporte une seconde zone annulaire superposée à la première zone annulaire. La seconde zone annulaire comporte la pluralité d'ouvertures agencées sur 360°.

Selon une forme de réalisation, la seconde zone annulaire comporte N ouvertures. La trame quant à elle comporte N+2 ou N-2 motifs. Ce mode de réalisation permet d'obtenir un effet moiré symétrique, c'est-à-dire qu'on a sur un axe deux ouvertures qui vont apparaitre noires en même temps et sur un axe perpendiculaire deux ouvertures qui vont apparaitre blanches.

Selon une forme de réalisation, l'indicateur d'information temporelle présente un aspect visuel différent du premier et second aspect visuels des motifs de la trame.

L'indicateur d'information temporelle peut être dimensionné pour qu'une portion de l'indicateur soit visible au travers d'une ouverture afin d'indiquer l'information temporelle pendant que l'autre portion de l'indicateur est cachée par une portion du corps fixe entre deux ouvertures, de sorte que l'indicateur soit toujours partiellement visible lors de la rotation du disque mobile.

Selon une forme de réalisation, les motifs des premier et second ensembles formant la trame ont chacun la forme d'un segment angulaire tronqué. L'angle entre les axes médians de deux motifs identiques successifs, par exemple l'angle entre les axes médians de deux motifs noirs, est égal à 360/(N-1)/2 degrés ou à 360/(N+1)/2 degrés, où N est le nombre d'ouvertures. Dans un mode de réalisation avec N=30 ouvertures, cet angle peut par exemple être de 360/29/2 degrés ou de 360/31/2 degrés.

Les motifs d'un premier ensemble couvrent par exemple un segment angulaire de 360/(N-1)/2 degrés ou de 360/(N+1)/2 degrés, par exemple un segment d'environ 6° dans le cas où le nombre d'ouvertures N = 30.

Selon une forme de réalisation, l'un du premier et second aspect visuels des motifs de la trame est identique à l'aspect visuel du mobile muni des ouvertures, respectivement identique à l'aspect visuel du corps fixe muni des ouvertures. Cela permet de maximiser l'effet moiré. Par exemple, si la trame comporte des motifs alternativement noirs et blancs, le mobile ou le disque muni d'ouvertures est avantageusement soit noir, soit blanc.

Selon une forme de réalisation, il existe un contraste élevé entre le premier aspect visuel et le second aspect visuel. L'un des premier et second aspects visuels est par exemple une couleur noir uniforme, l'autre des premier et second aspects visuels étant par exemple une couleur blanche uniforme.

### Brève description des figures

Des exemples de mise en œuvre de l'invention sont indiqués dans la description illustrée par les figures annexées dans lesquelles :
- la figure 1 illustre une vue partielle d'un cadran d'une pièce d'horlogerie comportant un compteur combinant l'indication d'une information temporelle et une animation à effet moiré selon un premier mode de réalisation;
- la figure 2 illustre une vue de dessus du disque mobile agencé sous le cadran de la figure 1 en correspondance avec le compteur;
- la figure 3 illustre un vue de dessus d'un disque mobile destiné à être monté au-dessus du corps fixe d'un compteur selon un deuxième mode de réalisation ;
- la figure 4 illustre un vue de dessus d'un disque mobile destiné à être monté au-dessus du corps fixe d'un compteur selon une variante du deuxième mode de réalisation ;
- la figure 5 illustre une vue de dessus de la partie fixe d'un compteur de la pièce d'horlogerie comportant une trame annulaire selon une variante du deuxième mode de réalisation et au-dessus de laquelle est monté le disque mobile de la figure 3 ou de la figure 4 ;
- La figure 6 illustre le disque mobile de la figure 3 monté de manière pivotante sur la partie fixe du compteur de la figure 5, et
- La figure 7 illustre le disque mobile de la figure 4 monté de manière pivotante sur la partie fixe du compteur de la figure 5.

### Exemple(s) de mode de réalisation de l'invention

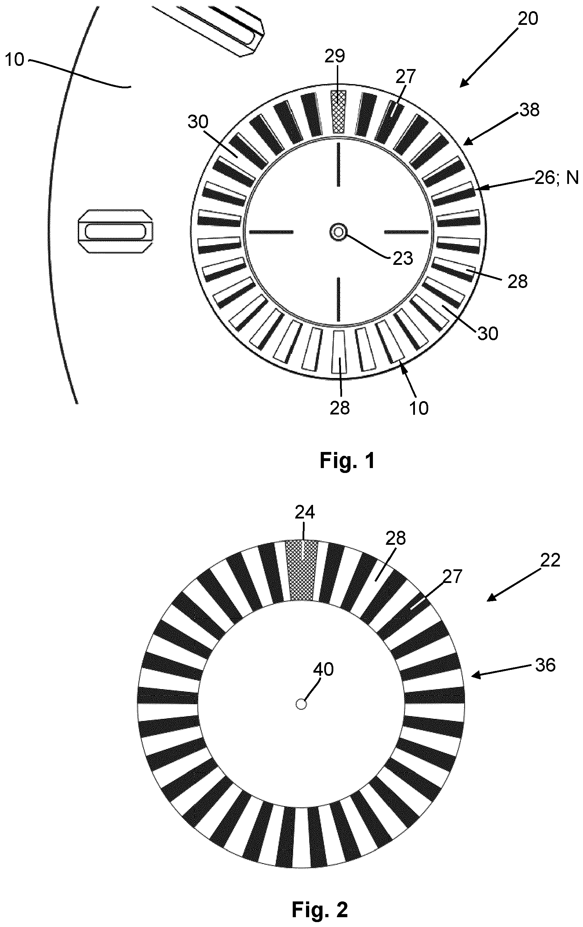

Selon un premier mode de réalisation de l'invention illustrée par les figures 1 et 2, une pièce d'horlogerie (non représentée) comporte un compteur 20 configuré, d'une part, pour indiquer une information temporelle et, d'autre part, pour produire une animation à effet moiré.

Le compteur 20 comporte un corps fixe 10 et un disque mobile 22 (figure 2). Dans cet exemple réalisation, le corps fixe 10 est constitué par une portion du cadran, par exemple une portion annulaire du cadran. Il est aussi possible de prévoir un corps fixe sous la forme d'une pièce rapportée sur le cadran, par exemple une pièce rapportée sur une portion annulaire du cadran, ou d'un pont du mouvement par exemple. Le corps fixe est donc fixe par rapport à la platine du mouvement de montre.

Le compteur 20 peut par exemple être un compteur des secondes d'un chronographe ou des secondes d'un compte à rebours. Le compteur 20 comporte une zone annulaire périphérique 38 possédant une pluralité d'ouvertures 26 agencées sur 360°. Ces ouvertures 26 sont réalisées dans le corps fixe 10.

Dans ce premier mode de réalisation, le disque mobile 22 de la figure 2 est agencé sous le corps fixe 10 selon la figure 1. Le disque 22 comporte en son centre une ouverture 40 afin que le disque puisse être monté de manière solaire sur un axe 23, par exemple par chassage. L'axe 23 passe au travers d'une ouverture réalisée au centre du compteur 20 et comporte un pignon (non illustré) agencé pour être en prise avec le mouvement de la pièce d'horlogerie pour pouvoir être entraîné en rotation. Une aiguille peut être montée sur l'axe 23 au-dessus du compteur.

Le disque mobile 22 comporte une zone annulaire périphérique 36 comportant une trame possédant une répétition de motifs comprenant un premier ensemble de motifs ayant un premier aspect visuel 27 et un second ensemble de motifs ayant un second aspect visuel 28.

Le choix de l'aspect visuel des motifs des premier et second ensembles de la trame est dicté non seulement par des considérations esthétiques mais aussi par des considérations techniques puisque il doit exister un contraste élevé entre le premier aspect visuel et le second aspect visuel afin que l'effet moiré soit optimal permettant de savoir d'un seul coup d'œil si par exemple la fonction chronographe est en marche ou à l'arrêt.

At titre d'exemple non limitatif, le premier aspect visuel est une couleur uniforme noire alors que le second aspect visuel est une couleur uniforme blanche. Il est à noter que les motifs de la trame peuvent revêtir un aspect visuel non-uniforme pour autant qu'un contraste soit obtenu entre les motifs du premier et du second ensemble constituant la trame.

Selon la figure 2, les motifs ayant le premier aspect visuel sont agencés en alternance avec les motifs ayant le second aspect visuel sur 360° dans une zone annulaire périphérique 36.

La zone annulaire périphérique 38 du compteur 20 comporte N ouvertures 26 réalisée dans le corps fixe 10. Les ouvertures 26 (figure 1) sont séparées entre elles par une pluralité de portions 30 du corps fixes destinées à masquer progressivement les motifs de la trame du disque mobile 22 afin de produire l'effet moiré lorsque le disque 22 est mis en rotation.

La trame agencée sur la zone annulaire périphérique 36 du disque mobile 22 comporte un nombre différent de motifs du premier ensemble et de motifs du deuxième ensemble. A titre d'exemple, la trame peut comporter N-1, N+1, N-2 ou N+2 motifs de chaque type.

Selon la variante de réalisation illustrée par les figures 1 et 2, la zone annulaire périphérique 38 du corps fixe 10 du compteur 20 comporte N=30 ouvertures 26 alors que la trame du disque mobile 22 comporte un nombre inférieur à N de motifs d'un premier aspect visuel 27, par exemple des motifs de couleur noir agencés en alternance avec des motifs d'un second aspect visuel 28, par exemple des motifs de couleur blanche. L'indicateur 24 fait partie intégrante de la trame.

Dans cet exemple, la trame de la zone annulaire périphérique 36 du disque mobile 22 comporte :
- 28 motifs de couleur noir qui ont chacun la forme d'un segment angulaire tronqué, est espacés entre eux par un pas angulaire égal à 360/(N-1) /2 degrés, où N est le nombre d'ouvertures. Bien qu'il n'y ait que 28 motifs de couleur noir visibles, l'espace régulier entre ces motifs sur 360° correspond à 29 motifs. Le nombre d'ouvertures 26 dans cet exemple étant de 30 ouvertures, l'angle étant donc de 6,2° par secteur tronqué.
- 27 motifs de couleur blanche qui ont chacun la forme d'un segment angulaire tronqué ayant un angle de 6,2° agencé en alternance avec les motifs de couleur noir,
- 2 motifs de couleur blanche qui ont chacun la forme d'un segment angulaire tronqué plus étroit que les autres motifs blancs, par exemple sur un angle de 3,1°,
- ainsi qu'un troisième motif 24 d'un aspect visuel contrasté par rapport au premier et second motifs 27, 28.

Ce troisième motif 24 a également la forme d'un segment angulaire tronqué mais qui s'étend dans cet exemple sur un angle plus large que les motifs noirs, par exemple sur 12,4°. Ce troisième motif 24 est agencé entres les deux segments angulaires de couleur blanche plus étroits et remplit la fonction d'indicateur d'une information temporelle, de préférence les secondes. Les dimensions plus larges de ce motif en font un indicateur toujours visible au travers d'une des ouvertures 26 du corps fixe puisque la largeur angulaire de cet indicateur correspond dans cet exemple à celle de deux segments noirs, l'un visible dans l'une des ouvertures 26 du corps fixe, l'autre masqué par l'une des portions 30 du corps fixe situées entre les ouvertures.

Le motif 24 peut par exemple indiquer les secondes d'un compteur des secondes 20 d'un chronographe. Lorsque le compteur 20 est mis en marche, le motif 24 va indiquer la seconde courante par incréments de deux.

Quand un secteur angulaire noir est complètement visible au travers de l'une des ouvertures 26, il va mettre une seconde pour se cacher sous l'une des portions 30 du corps fixe 10, puis une seconde pour réapparaitre dans l'ouverture suivante. On peut observer ainsi un effet visuel qui donne l'impression que les secteurs angulaires noirs font un tour en deux seconde, cette impression étant nommée «effet moiré ». L'effet moiré se déplace dans le sens inverse de la rotation du disque mobile selon cette forme de réalisation.

Il est aussi possible d'obtenir un effet moiré qui se déplace dans le sens de rotation du disque mobile, en prévoyant un nombre de motifs de chaque aspect visuel plus grand que le nombre d'ouvertures N. A titre d'exemple, le corps fixe pourrait comporter 30 ouvertures et le disque mobile 31 motifs de chaque couleur.

Selon une autre forme de réalisation non illustrée, les secondes sont indiquées au moyen d'une aiguille des secondes rendue solidaire de l'axe 23 du disque mobile 22, par exemple par chassage.

Dans ce cas, la trame de la zone annulaire périphérique 36 du disque mobile 22 peut comporter par exemple 29 motifs d'un premier aspect visuel, par exemple noir, qui ont chacun la forme d'un segment angulaire tronqué ayant un angle de 6,2° ainsi que 29 motifs d'un second aspect visuel, par exemple de couleur blanche qui ont chacun la forme d'un segment angulaire tronqué ayant un angle de 6,2°. Les motifs blancs sont agencés en alternance avec les motifs noirs. Cette forme de réalisation a l'avantage d'améliorer la résolution de l'affichage des secondes.

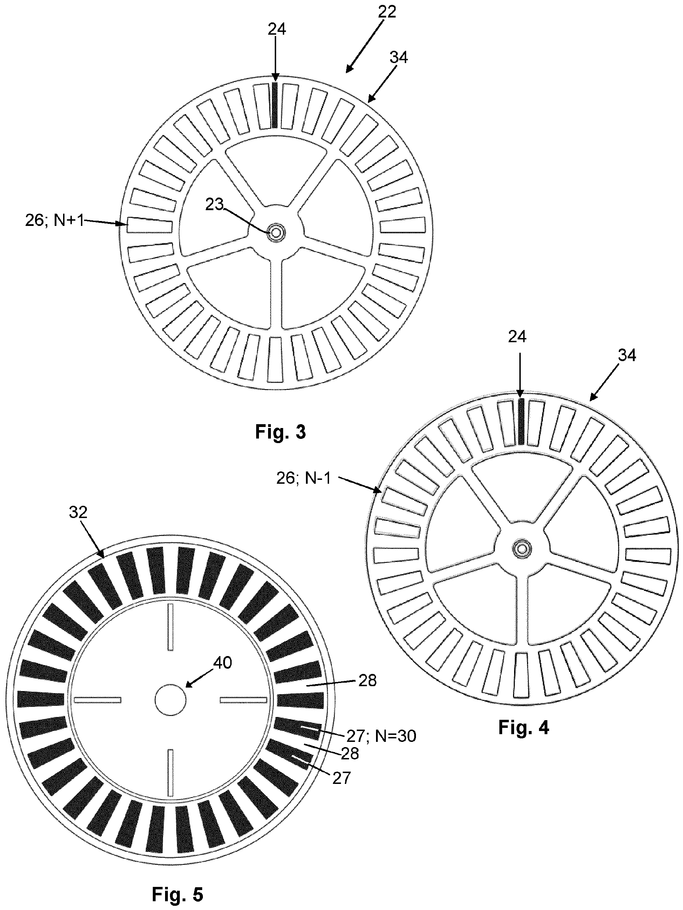

Les figures 3 à 7 représentent les éléments du compteur sans le corps fixe de la montre, selon un deuxième mode de réalisation avec un disque mobile 22 muni d'ouvertures au-dessus d'un corps fixe par exemple lié au cadran. Selon la figure 3, le disque mobile 22 comporte une zone annulaire périphérique 34 pourvue de N ouvertures 26 régulièrement espacées les unes des autres sur 360°. La trame annulaire illustrée sur la figure 5 comporte quant à elle N-1 motifs de chaque type. Dans cet exemple, le disque mobile 22 comporte N=31 ouvertures 26 et la trame annulaire comporte (N-1)=30 motifs noirs et (N-1)=30 motifs blancs.

Chaque ouverture 26 est de forme et de dimensions identique. L'ouverture peut être par exemple en forme de secteur angulaire tronqué ou circulaire. La zone annulaire périphérique du disque mobile comporte par ailleurs une indication temporelle 24 par exemple sous la forme d'un trait disposé entre deux ouvertures, ou d'une aiguille.

Le disque mobile 22 peut être par exemple un mobile des secondes. Le mobile des secondes peut être destiné à indiquer la seconde d'une pièce d'horlogerie intégrant un mouvement mécanique sans complication. Dans une forme de réalisation avantageuse, l'utilisation du disque mobile 22 est particulièrement adaptée pour une pièce d'horlogerie comportant un mouvement mécanique avec une ou plusieurs complications du type chronographe ou compte à rebours.

Selon cette forme de réalisation, le disque mobile 22 de la figure 3 ou 4 est chassé sur un axe des secondes (non représenté) traversant le cadran au niveau d'une ouverture centrale 40 dans le corps fixe d'un compteur comportant une zone annulaire 32 concentrique à l'axe des secondes (figure 5). La zone annulaire 32 comporte une trame constituée d'une répétition de motifs de forme identique, par exemple en forme de secteur angulaire tronqué positionnés les uns à côté des autres dans la zone annulaire sur 360°.

Cette répétition de motifs comprend un premier ensemble de motifs ayant un premier aspect visuel 27, par exemple des motifs noirs et un second ensemble de motifs ayant un second aspect visuel 28, par exemple des motifs blancs. Les motifs 27 ayant le premier aspect visuel sont agencés en alternance avec les motifs 28 ayant le second aspect visuel sur 360°.

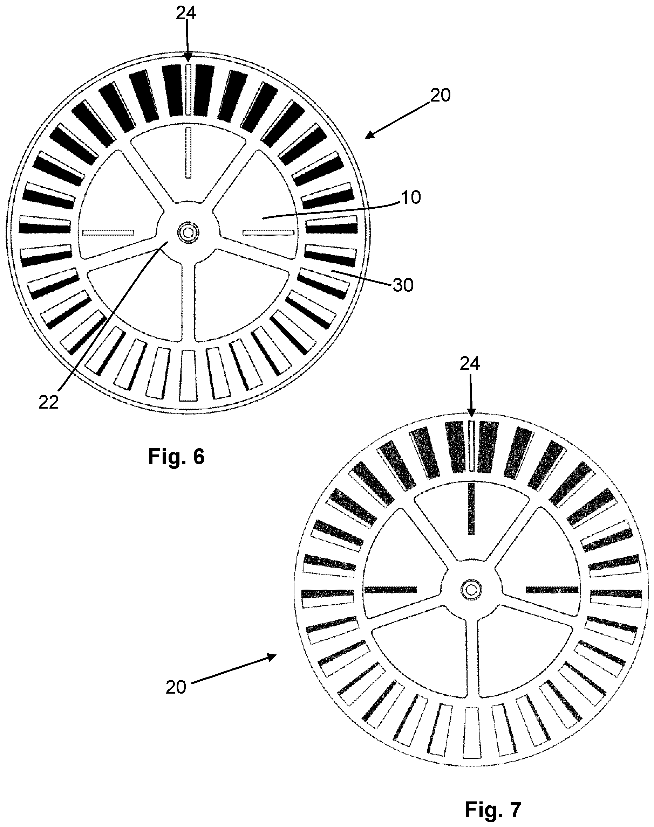

Selon une forme de réalisation, le disque mobile de la figure 3 comporte N=31 ouvertures 26 et est chassé sur l'axe des secondes de sorte que la zone annulaire périphérique 34 du disque mobile 22 soit superposée au-dessus de la trame annulaire du corps fixe de la figure 5, comme illustré par la figure 6. Lorsque le chronographe est actionné, le disque mobile 22 effectue une rotation complète en 60 secondes tout en produisant un effet moiré donnant l'impression que le disque mobile 22 tourne beaucoup plus vite que la réalité. Selon cet exemple, le pas angulaires entre les segments de la trame sur le corps fixe représenté à la figure 5 est égal à 360/(N-1) /2 degrés, où N est le nombre d'ouvertures, ce qui donne un pas de 6° entre secteurs tronqués.

A titre d'exemple, si la trame annulaire du corps fixe de la figure 5 comporte 30 motifs d'un premier aspect visuel intercalés entre 30 motifs d'un second aspect visuel et que la zone annulaire 34 du disque mobile 22 comporte N=31 ouvertures 26 de forme identique à la forme des motifs, la superposition selon la figure 6 du disque mobile à la trame du corps fixe produit un effet moiré tournant dans le même sens de rotation que la rotation du disque mobile 22 lorsque le chronographe est actionné, donnant l'impression trompeuse que le disque mobile tourne dans un intervalle de 2 secondes.

L'indication des secondes 24 représenté par un trait sur le disque mobile 22 indique pourtant que celui-ci fait une rotation complète non pas en deux secondes mais belle et bien en 60 secondes. L'effet moiré a ainsi pour avantage d'indiquer en un coup d'œil si le chronographe est à l'arrêt ou en marche.

Dans le cas de figure où la zone annulaire 34 du disque mobile 22 illustré à la figure 4 comporte N=29 ouvertures de forme identique à la forme des motifs, la superposition du disque mobile à la trame du corps fixe selon la figure 5 produit un effet moiré tournant dans un sens de rotation opposé au sens de du disque mobile 22 lorsque le chronographe est actionné (figure 7).

Il est possible de changer la période de l'effet moiré en jouant sur l'aspect visuel de la trame et sur le nombre d'ouvertures. Par exemple, l'un du disque mobile 22 et du corps fixe 10 peut comporter N=60 ouvertures et l'autre du disque mobile et du corps fixe peut comporter une trame comprenant 59 secteurs angulaires ayant un premier aspect visuel et 59 secteurs angulaires ayant un second aspect visuel. Dans ce cas, la période de l'effet moiré sera d'une seconde pour un disque mobile entraîné à raison d'un tour par minute.

Au vu des contraintes de dimensions, il ne faut toutefois pas négliger l'effet de puit si les ouvertures sont très étroites par rapport à leur profondeur. C'est pourquoi une période de deux secondes pour l'effet moiré est à privilégier.

L'effet moiré a comme avantage technique d'indiquer en un coup d'œil si une fonction particulière, notamment une complication du mouvement horloger de la pièce horlogerie, par exemple un chronographe, est en marche ou à l'arrêt.

Par ailleurs, cet affichage permet d'avoir deux vitesses de rotation perçues différentes, voire également deux sens de rotation perçus différemment et ceci ave un disque mobile unique.

## Revendications

1. Pièce d'horlogerie comportant un mouvement horloger comprenant une complication de type chronographe ou compte à rebours, un corps fixe (10) et un affichage (20) à effet moiré pour l'affichage d'une information temporelle associée au chronographe ou au compte à rebours, l'affichage comportant un disque mobile (22) avec un indicateur (24) de l'information temporelle, le disque mobile (22) étant, d'une part, solidaire d'un axe (23) en prise avec le mouvement horloger et, d'autre part, agencé pour tourner en dessus ou en-dessous du corps fixe (10), l'un du disque mobile (22) et du corps fixe (10) comportant une pluralité d'ouvertures (26) agencées sur 360°, l'autre du disque mobile (22) et du corps fixe (10) comportant une trame possédant une répétition de motifs comprenant un premier ensemble de motifs ayant un premier aspect visuel (27) et un second ensemble de motifs ayant un second aspect visuel (28), les motifs ayant le premier aspect visuel étant agencés en alternance avec les motifs ayant le second aspect visuel sur 360°, ladite pluralité d'ouvertures (26) étant séparées entre elles par une pluralité de portions (30) destinées à masquer progressivement les motifs de la trame afin de produire l'effet moiré lorsque le disque mobile (22) est en rotation.

2. Pièce d'horlogerie selon la revendication 1, dans lequel l'affichage est un compteur (20) du chronographe ou du compte à rebours, le compteur (20) comprenant le disque mobile (22) dont l'axe de rotation est coaxial à l'axe central du compteur (20), ledit indicateur de l'information temporelle est sous la forme d'un segment (24) disposé sur le disque mobile (22) ou sous la forme d'une aguille montée sur l'axe (23) du disque mobile (22) afin que le compteur (20) puisse indiquer une information temporelle.

3. Pièce d'horlogerie selon la revendication 2, dans laquelle le compteur (20) est un compteur de seconde, le disque mobile (20) étant en prise avec le mouvement horloger pour être entrainé à raison d'un tour par minute afin que ledit indicateur (24) indique les secondes.

4. Pièce d'horlogerie selon la revendication 2 ou 3, dans laquelle le corps fixe (10) est solidaire d'un cadran et comprend une première zone annulaire (32) comportant ladite trame, et dans laquelle le disque mobile (22) est agencé au-dessus du corps fixe et comporte une seconde zone annulaire (34) comportant ladite pluralité d'ouvertures (26) agencée sur 360°.

5. Pièce d'horlogerie selon la revendication précédente, dans laquelle le pas entre lesdites ouvertures (26) est plus petit que le pas angulaire entre motifs de même aspect visuel pour que l'effet moiré se produise dans le sens de la rotation du disque mobile (22).

6. Pièce d'horlogerie selon la revendication 4, dans laquelle le pas entre lesdites ouvertures (26) est plus grand que le pas angulaire entre motifs de même aspect visuel pour que l'effet moiré se produise dans le sens inverse de la rotation du disque mobile (22).

7. Pièce d'horlogerie selon l'une des revendications 5 ou 6, le nombre d'ouvertures (N) étant égal à 30 et le disque mobile (22) effectuant une rotation en 60 secondes, de sorte que l'effet moiré donne l'illusion que le disque mobile (22) effectue une rotation en deux secondes lorsqu'une complication du mouvement est en marche.

8. Pièce d'horlogerie selon la revendication 2 ou 3, dans laquelle le compteur (20) comporte une première zone annulaire (36) comprenant ladite trame, la première zone annulaire (36) faisant partie du disque mobile (22), ledit disque mobile étant agencé sous le corps fixe (10), et dans laquelle le corps fixe (10) comporte une seconde zone annulaire (38) superposée à la première zone annulaire (36), la seconde zone annulaire (38) comportant ladite pluralité d'ouvertures agencées sur 360°.

9. Pièce d'horlogerie selon la revendication précédente, dans laquelle la seconde zone annulaire comporte N ouvertures (26), ladite trame comportant N-1 motifs de même aspect visuel.

10. Pièce d'horlogerie selon la revendication précédente, dans laquelle la seconde zone annulaire comporte N ouvertures (26), ladite trame comportant N+1 motifs de même aspect visuel.

11. Pièce d'horlogerie selon la revendication précédente, N étant égal à 29, 30 ou 31.

12. Pièce d'horlogerie selon l'une des revendications 1 à 11, dans laquelle l'indicateur d'information temporelle (24) présente un aspect visuel diffèrent du premier et second aspect visuels des motifs de la trame.

13. Pièce d'horlogerie selon la revendication précédente, dans laquelle l'indicateur d'information temporelle (24) présente un aspect visuel diffèrent du premier et second aspect visuels des motifs de la trame, l'indicateur d'information temporelle (24) étant dimensionné pour qu'une portion de l'indicateur (24) soit visible au travers d'une ouverture (26) afin d'indiquer l'information temporelle pendant que l'autre portion de l'indicateur d'information temporelle (24) est cachée par une portion (30) du corps fixe (10) entre deux ouvertures (26) de sorte à ce que l'indicateur d'information temporelle soit toujours visible lors de la rotation du disque mobile (22).

14. Pièce d'horlogerie selon l'une des revendications précédentes, dans laquelle les motifs desdits premier et second ensembles de motifs ont chacun la forme d'un segment angulaire tronqué, espacés entre eux par un pas angulaire égal à 360/(N-1) /2 degrés respectivement à 360/(N+1) /2 degrés, où N est le nombre d'ouvertures.

15. Pièce d'horlogerie selon l'une des revendications précédentes, dans laquelle l'un du premier et second aspect visuels (27, 28) des motifs de la trame est identique à l'aspect visuel du disque mobile (22) muni des ouvertures ou du corps fixe (10) muni des ouvertures.
